## Europäisches Patentamt
## European Patent Office
## Office européen des brevets

(11) Veröffentlichungsnummer: **0 174 439**
**A2**

## (12) EUROPÄISCHE PATENTANMELDUNG

(21) Anmeldenummer: **85106892.4**

(22) Anmeldetag: **04.06.85**

(51) Int. Cl.⁴: **A 47 J 41/02**

(30) Priorität: **11.09.84 DE 3433354**

(43) Veröffentlichungstag der Anmeldung:
**19.03.86 Patentblatt 86/12**

(84) Benannte Vertragsstaaten:
**AT BE CH DE FR GB IT LI LU NL SE**

(71) Anmelder: **Rotpunkt Dr. Anso Zimmermann**
**Industriestrasse**
**D-6434 Niederaula / Bad Hersfeld(DE)**

(72) Erfinder: **Zimmermann, Anso, Dr.**
**Seilerweg 34**
**D-6430 Bad Hersfeld(DE)**

(74) Vertreter: **Körber, Wolfhart, Dr. et al,**
**Patentanwälte Dipl.-Ing. H. Mitscherlich Dipl.-Ing. K.**
**Gunschmann Dr.rer.nat. W. Körber Dipl.Ing. J.**
**Schmidt-Evers Dipl.-Ing. W. Melzer Steinsdorfstrasse 10**
**D-8000 München 22(DE)**

(54) Isolierkanne oder -flasche mit einem ein Verschlussglied tragenden Verschlussschieber.

(57) Die Erfindung betrifft eine Isolierkanne oder -flasche mit einem Gehäuse, in dem eine oberseitige Ausnehmung angeordnet ist, die durch einen Deckel verschließbar ist, mit einer im Bereich der Ausnehmung angeordneten Öffnung, die durch einen ein Verschlußglied tragenden Verschlußschieber zu verschließen und zu öffnen ist, der im Deckel zwischen einer öffnungs- und Schließstellung verstellbar gelagert und durch einem in Richtung auf die Schließstellung starr wirksamen Verstellmechanismus mit Handhabe, insbesondere Spindeltrieb oder dergleichen, verstellbar ist, wobei die Bewegung der Handhabe in der Schließstellung begrenzt ist und der Deckel längs der Verstellbewegung des Verschlußschiebers am Gehäuse festgelegt ist. Es ist der Zweck der Erfindung, die Isolierkanne oder -flasche so auszugestalten, daß bei Vermeidung einer Überlastung des Verschlußgliedes auch bei Abstandstoleranzen zwischen dem Deckel und der Öffnung ein dichter Verschluß der Öffnung gewährleistet ist. Dies wird dadurch erreicht, daß zwischen dem Verschlußglied (14) und dem Verschlußschieber (16) eine elastische Verbindung (15) angeordnet ist, die eine längs zur Verstellbewegung gerichtete Relativbewegung zwischen dem Verschlußschieber (16) und dem Verschlußglied (14) erlaubt, wobei das Verschlußglied (14) in der Schließstellung gegen die Dichtungsfläche (34) der Öffnung (9) vorgespannt ist.

./...

FIG.1

Isolierkanne oder -flasche mit einem ein
Verschlußglied tragenden Verschlußschieber
------------------------------------------------

Die Erfindung bezieht sich auf eine Isolierkanne oder
-flasche nach dem Oberbegriff des Anspruchs 1.

Bei Isolierkannen oder -flaschen ist aus mehreren
Gründen eine Festlegung des Deckels gefordert. Ein
einfacher Grund hierfür besteht darin, eine unbeabsichtigte Lösung des Deckels zu verhindern. Dies gilt
sowohl für Schraubdeckel, als auch für sogenannte
Steckdeckel, die z. B. durch einen Rastverschluß oder
einen Bajonettverschluß in ihrer eingesetzten Position
gehalten werden. Aus Zweckmäßigkeitsgründen erfolgt
die Festlegung des Deckels durch Anlage deckelseitiger
Flächen an gehäuseseitigen Flächen. Bei einem Schraubdeckel erfolgt die Festlegung z. B. durch den Anschlag
einer Schulter, die zwischen dem Deckel und dem Gehäuse zur Wirkung kommt. Bei Steckdeckeln sind solche
Anlageflächen ebenfalls vorgegeben, z. B. bei einem
Bajonettverschluß durch den Bajonettverschluß selbst.

Einer Festlegung des Deckels bedarf es auch deshalb,
weil der Deckel als Wiederlager für den Verstellmechanismus zum Verstellen des Verschlußschiebers dient.

Bei Handhaben, deren Schließbewegung z. B. durch eine
Markierung oder durch den Verstellmechanismus selbst,
z. B. begrenzte Schwenkbewegung eines Hebels, vorbestimmt oder zumindest begrenzt ist, ergeben sich in
der Praxis Schwierigkeiten bei der Abdichtung der
Öffnung. Diese Schwierigkeiten haben ihre Ursache in
sowohl gehäuseseitigen, als auch deckelseitigen Abmessungstoleranzen, wobei zu berücksichtigen ist, daß das Gehäuse, der Deckel und in weitem Maße auch der Verstellmechanismus aus Kunststoff bestehen können. Deshalb sind die Maßabweichungen sowohl durch Fertigungstoleranzen, als auch durch Verzug bedingt. Wenn z. B. der Abstand zwischen dem Deckel und der Öffnung etwas größer ausfällt, ist das Schließen durch das Verschlußglied nicht gewährleistet, obwohl die Handhabe sich schon in ihrer Schließstellung befindet. Wenn der vorgenannte Abstand etwas kleiner ausfällt, ist eine Überlastung des Verschlußgliedes nicht auszuschließen, weil das Verschlußglied schon auf dem Öffnungsrand aufliegt, wenn die Handhabe sich noch nicht in ihrer Schließstellung befindet.

Die Möglichkeit einer Überlastung des Verschlußgliedes bzw. der Abdichtungselemente ist auch grundsätzlich aufgrund unsachgemäßer Behandlung durch die Bedienungsperson beim Betätigen der Handhabe in ihre Schließposition nicht auszuschließen.

Der Erfindung leigt die Aufgabe zugrunde, eine Isolierkanne oder -flasche der eingangs bezeichneten Bauart so auszugestalten, daß bei Vermeidung einer Überlastung des Verschlußgliedes auch bei Abstandstoleranzen zwischen dem Deckel und der Öffnung ein dichter Verschluß der Öffnung gewährleistet ist,

Diese Aufgabe wird durch die im Anspruch 1 enthaltenen Merkmale gelöst.

Bei der erfindungsgemäßen Ausgesteltung paßt sich das Verschlußglied aufgrund der elastischen Verbindung automatisch an Abstandsunterschiede zwischen dem Deckel und der Öffnung an, die aufgrund von Maßtoleranzen vorgegeben sind, und nach deren Größe die Länge der Relativbewegung zu bemessen ist. Dabei wird das Verschlußglied in seiner Verschlußstellung gegen die Dichtungsfläche der Öffnung vorgespannt, so daß zum einen die Rückstellung des Verschlußgliedes und zum anderen eine permanente Schließkraft gewährleistet ist. Die Schließkraft verbessert die Abdichtung der Öffnung und die Rückführung des Verschlußgliedes. Eine Überlastung der Abdichtungselemente, nämlich des Öffnungsrandes und des Verschlußgliedes bzw. einer vorhandenen Dichtung ist bei der erfindungsgemäßen Ausgestaltung nicht möglich, weil die Abdichtungselemente nicht mehr als mit der am Verschlußglied wirksamen Vorspannkraft belastet werden können.

Ein Toleranzausgleich wäre zwar auch durch eine Dichtung hoher Elastizität zwischen den Abdichtungselementen möglich, jedoch besteht darin keine dauerhafte Lösung für eine Isolierkanne oder -flasche, weil eine Isolierkanne oder -flasche sowohl zum Warmhalten als auch zum Kühlen gebraucht wird und angesichts der zu erwartenden Temperaturschwankungen und der Vielzahl der Beanspruchungen (Öffnen und Schließen nach jedem Ausgießen, um einen Temperaturaustausch zu vermeiden) ein dauerhafter dichter Verschluß nicht gewährleistet ist.

In den Ansprüche 2 und 3 sind einfach herstellbare und deshalb preiswerte sowie raumsparende Ausgestaltungen enthalten, die eine sichere Funktion gewährleisten.

Einfache Lösungen ergeben auch die Ausgestaltungsmerkmale der Ansprüche 4 und 5. Gemäß Anspruch 4 wird ein sehr einfacher und störungsunanfälliger Verstellmechanismus vorgegeben, der gemäß Anspruch 5 einfach, z. B. in einstückiger Bauweise, mit einer Drehhandhabe verbunden ist.

Durch die Ausgestaltung nach Anspruch 6 wird eine mögliche Überlastung der Gewindegänge vermieden, weil die quer zur Drehrichtung gerichteten Anschlagflächen eine solche vermeiden. Darüberhinaus wird durch den in der Schließstellung des Verschlußgliedes wirksamen Anschlag verhindert, daß das Verschlußglied und der Verschlußschieber vollständig zusammengedrückt und auf diese Weise die Abdichtungselemente doch noch überlastet werden könnten. Die Anordnung ist so getroffen, daß der die Schließbewegung begrenzende Anschlag spätestens dann zur Wirkung kommt, wenn das Verschlußglied und der Verschlußschieber vollständig zusammengeschoben sind. Im Hinblick auf eine die Öffnungs- und Schließstellung der Handhabe kennzeichnende Markierung ist es vorteilhaft, den Schwenkbereich der Handhabe zwischen ihrer Öffnungs- und Schließstellung auf eine halbe Umdrehung zu begrenzen.

Die Ausgestaltung nach Anspruch 8 eignet sich insbesondere für einen Schraubdeckel. Diese Weiterbildung ermöglicht es nämlich, die Handhabe auch zum Ein- und Ausschrauben des Schraubdeckels zu benutzen. Das Einschrauben des Schraubdeckels ist in der Schließstellung der Handhabe möglich und das Aufschrauben in der Öffnungsstellung der Handhabe. In diesen Stellungen ist die Mitnahme des Schraubdeckels durch die zwischen dem Verschlußschieber und dem Schraubdeckel wirksamen Anschläge gewährleistet.

Die Ausbildungen nach den Ansprüchen 9 und 10 ermöglichen die Festlegung des Schraubdeckels durch Anlage des Deckelrandes auf der Oberseite des Gehäuses in der Schraubendstellung. Aufgrund des Schraubgewindes läßt sich eine angemessene Aufdrehhemmung des Schraubdeckels erreichen, so daß beim Drehen der Handhabe zwischen Ihrer Öffnungs- und Schließstellung der Schraubdeckel nicht mitgedreht wird. Dieses günstige Verhalten wird ebenfalls durch die quer zur Drehrichtung gerichteten Anschlagflächen gemäß Anspruch 6 ermöglicht. Außerdem führt diese Ausgestaltung zu einer einfachen und guten Abdichtung des Ausnehmungsrandes. Eine solche Abdichtung wird insbesondere für bauchige Isolierkannen (Teekannen) von Bedeutung, weil solche Isolierkannen zum Ausgießen der Restflüssigkeit sehr weit auf den Kopf geschwenkt werden müssen. In dieser Stellung gelangt die Flüssigkeit in den Bereich des Ausnehmungsrandes und sie tritt dort neben dem Ausgießer aus, wenn keine Dichtung vorhanden ist.

Die vorliegende Erfindung erhält vermehrt Bedeutung, wenn zwischen dem Rand des Deckels und der Oberseite des Gehäuses eine Dichtung gemäß Anspruch 10 angeordnet ist. In einem solchen Fall kann die Schraubendstellung des Deckels je nach Flexibilität der Dichtung unterschiedlich sein, wodurch sich die Abstandstoleranzen zwischen dem Deckel und der Öffnung vergrößern.

Durch die Ausgestaltung nach Anspruch 11 läßt sich in einfacher Weise ein hohler Deckel bilden. Außerdem ist sie aus Montage- bzw. Demontagegründen vorteilhaft.

Beim Vorhandensein eines Dichtungsringes gemäß Anspruch 10 empfiehlt sich die Ausgestaltung nach Anspruch 12, weil durch diese Ausgestaltung sowohl die Abdichtung zwischen dem Deckel und dem Gehäuse, als auch gleichzeitig die Abdichtung der Teilungsfuge erreicht wird, so daß keine Flüssigkeit in die Teilungsfuge einzudringen vermag.

Eine Abdichtung des Spaltes zwischen dem Verschlußschieber bzw. der Handhabe und dem Gehäuseober- und Gehäuseunterteil dienen auch die Merkmale nach Anspruch 13.

Nachfolgend wird ein Ausführungsbeispiel der Erfindung anhand einer vereinfachten Zeichnung näher beschrieben.

Es zeigt:

Fig. 1    eine erfindungsgemäß ausgestaltete Isolierkanne im senkrechten Teilschnitt;

Fig. 2    einen horizontalen Teilschnitt durch den Deckel der Isolierkanne in Höhe der Ebene E.

Die allgemein mit 1 bezeichnete Isolierkanne weist ein aus Kunststoff bestehendes Gehäuse 2 auf, an das einstückig ein Ausgießer 3 und ein Henkel 4 angeformt sind. Das Gehäuse 2 umschließt einen Isolierbehälter 5, dessen Öffnungsrand gegen eine Schulter 6 eines Kopfteils 7 des Gehäuses 8 in nicht dargestellter Weise dicht gespannt ist. Das Kopfteil 7 umgibt eine oberseitige Ausnehmung 8, in der eine mit der Öffnung des Isolierbehälters 5 koaxial angeordnete Öffnung 9 angeordnet ist. Der Ausgießer 3 schließt seitlich an die Ausnehmung 8 an. Von oben ist in die Ausnehmung 8 ein allgemein mit 11 bezeichneter Schraubdeckel einschraubbar, der in der eingeschraubten Position mit einem Rand 12 auf der Oberseite 13 des Gehäuses 2 dicht aufliegt.

Bei dem vorliegenden Ausführungsbeispiel handelt es sich um eine Teekanne, das heißt, der Isolierbehälter 5 ist verhältnismäßig weit ausgebaucht, und das Gehäuse 2 ist in Anpassung an eine übliche Teekannenform gedrungen. Deshalb ist es zum Ausgießen der Rest-

0174439

flüssigkeit in der Isolierkanne 1 notwendig, diese sehr stark über Kopf zu schwenken, so daß die Restflüssigkeit auszufließen vermag.

Die Öffnung 9 ist durch ein Verschlußglied 14 wahlweise zu schließen und zu öffnen, das durch eine elastische Verbindung 15 mit einem Verschlußschieber 16 verbunden ist, der ein Außengewinde 17 aufweist, mit dem er in einem Innengewinde 18 im Deckel 11 durch Drehen um eine senkrechte Drehachse 19, die zugleich Mittelachse der Isolierkanne ist, senkrecht verstellbar ist. Der Verschlußschieber 16 durchfaßt den Deckel 11 vollständig und ist oberhalb des Deckels 11 zu einer Drehhandhabe 20 im Sinne eines Drehknopfes einstückig ausgeformt. Zum Zweck der Gewichtsersparnis sind der Verschlußschieber 16 und die Drehhandhabe 20 hohl ausgebildet. Beide Teile sind durch einen etwa zylindrischen Topf gebildet, dessen Boden mit 21 bezeichnet ist, und der oberseitig durch eine Verschlußplatte 22 verschließbar ist, der durch eine Verrastung 23 am Topf fixiert ist.

Die elastische Verbindung 15 wird durch einen innenseitig hinterschnittenen Kragen 24 an der Unterseite des Verschlußschiebers 16 gebildet, in dem ein Vorsprung 25 an der Oberseite des Verschlußglieds 14 senkrecht begrenzt beweglich geführt ist. Der Bewegungsspielraum ist mit s bezeichnet. Der Vorsprung 25 greift mit einem Rand in die Hinterschneidung des Kragens 24 ein. Auf diese Weise ist die Ausschubbewegung des Verschlußgliedes 14 gegenüber dem Verschlußschieber 16 begrenzt. Zwischen dem Verschlußglied 14 und dem Verschlußschieber 16 ist im vom Kragen 24 umschlossenen Hohlraum 26 eine Tellerfeder 27 angeordnet, die den Verschlußschieber 16 und das Verschlußglied 14 voneinander spreizt und somit das Verschlußglied 14 in Richtung auf die Öffnung 9 vorspannt. Aufgrund der runden Querschnittsform wenigstens im Bereich der elastischen Verbindung 15 sind das Verschlußglied 14 und der Verschlußschieber 16 relativ zueinander um die Drehachse 19 drehbar.

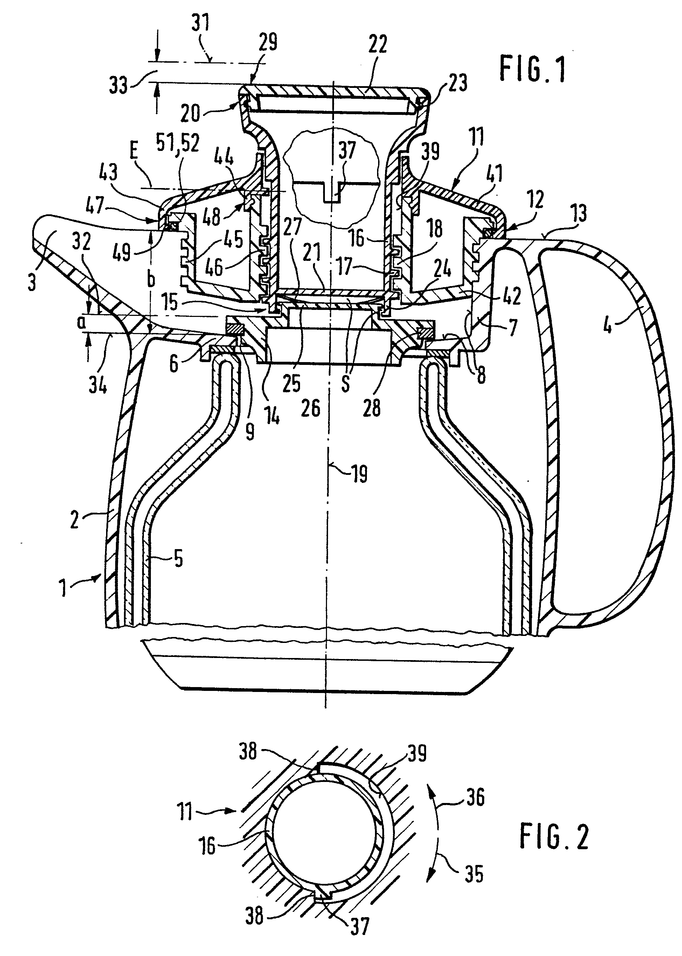

Gemäß Fig. 1 befindet sich das Verschlußglied 14 in seiner Schließstellung, in der es mit einer Ringdichtung 28 auf dem Rand der Öffnung 9 dichtend aufliegt. Aufgrund der Spannung der Tellerfeder 27 liegt eine bestimmte Schließkraft vor, die sich vorbestimmen läßt. Es wäre auch möglich, anstelle einer Fremdspannung nur das Eigengewicht des Verschlußgliedes 14 als Schließkraft auszunutzen, jedoch ist eine Federkraft zwecks einer sicheren Rückstellung des Verschlußgliedes 14 von Vorteil. Wie schon das Verschlußglied 14 befindet sich auch die Drehhandhabe 20 in ihrer Schließstellung, d. h. eine bevorzugt auf ihrer Oberseite bei 29 angebrachte Markierung befindet sich auf der Seite des Ausgießers 3.

Die Öffnungsstellungen des Verschlußgliedes 14 und der Drehhandhabe 20 sind durch Strichpunktlinien angedeutet und mit 31, 32 bezeichnet. Das Verschiebemaß 33 wird durch eine halbe Umdrehung der Drehhandhabe 20 erreicht. Die Anordnung ist so getroffen, daß der Abstand a der Öffnungsstellung 32 des Verschlußgliedes 14 von der Öffnung 9 etwas kleiner ist, als das Verschiebemaß 33 der Drehhandhabe 20 bzw. des Verschlußschiebers 16. Infolgedessen setzt das Verschlußglied 14 auf den Rand der Öffnung 9 auf, bevor die Drehhandhabe 20 ihre Schließstellung erreicht hat. Beim Weiterdrehen der Drehhandhabe 20 in die Schließstellung taucht der Vorsprung 25 des Verschlußgliedes 14 in den Hohlraum 26 der elastischen Verbindung ein, wobei durch die Auflage des Verschlußgliedes 14 auf dem Rand der Öffnung 9 der Verschluß gewährleistet ist. Die Anordnung ist weiterhin so getroffen, daß in der dargestellten Schließstellung der Vorsprung 25 etwa in der Mitte des vorhandenen Bewegungsspiels S steht. Durch diese Ausgestaltung bzw. Anordnung werden aufgrund Maßtoleranzen unterschiedliche Abstände b zwischen der Oberseite 13 des Gehäuses 2 bzw. der Unterseite des Randes 12 am Deckel und den Dichtungsflächen 34 am Rand der Öffnung 9 und an der Ringdichtung 28 automatisch ausgeglichen. Deshalb befindet sich das Verschlußglied 14 in seiner Schließstellung immer im freien Spielraum der elastischen Verbindung 15.

Die Schließbewegung 35 und die Öffnungsbewegung 36 der Drehhandhabe 20 ist durch Anschläge begrenzt, die durch einen seitlichen Ansatz 37 am Verschlußschieber 16 und zwei Vorsprüngen 38 gebildet werden, die auf der Wand des den Verschlußschieber 16 aufnehmenden Durchbruchs 39 im Deckel 11 angeordnet sind.

Durch Anschlag des Ansatzes 37 an den Vorsprüngen 38 kann der Deckel 11 mittels der Drehhandhabe 20 sowohl auf- als auch zugeschraubt werden.

Dabei ist die Anordnung so getroffen, daß bei Anlage des Ansatzes 37 am der Schließstellung zugeordneten Vorsprung 38 und bei vollends eingeschraubtem Deckel 11 der Vorsprung 25 etwa in der Mitte des vorhandenen Bewegungsspiels S steht.

Der Deckel 11 ist hohl ausgebildet und besteht aus einem schalenförmigen Deckeloberteil 41 und einem schalenförmigen Deckelunterteil 42, die aneinander verrastet sind und Wände 43 bis 46 aufweisen, von denen die Wand 45 des Deckelunterteils 42 das Außengewinde des Deckels 11 und die Wand 46 des Deckelunterteils 42 das Innengewinde 18 für den Verschlußschieber 16 aufweist. Die Wände 43, 44 des Deckeloberteils 41 übergreifen die Wände 45, 46 des Deckelunterteils 42 und sind an diesen bei 47 und 48 verrastet. Dabei ist die Wand 43 bis zur Unterseite des Randes 12 heruntergezogen. Im Bereich der mit 49 bezeichneten Teilungsfuge befindet sich eine Ringnut 51, in der ein elastischer Dichtungsring 52 eingesetzt ist, der in entspanntem Zustand über die Unterseite des Randes 12 vorragt. Wenn der Rand 12 gegen die Oberseite 13 des Gehäuses 2 geschraubt wird, wird der Dichtungsring 52 zusammengedrückt, wobei er gleichzeitig die Teilungsfuge 49 und die Fuge zwischen der Unterseite des Randes 12 und der Oberseite 13 abdichtet.

Mit Ausnahme der Tellerfeder 27, die aus Federstahl besteht, sind alle anderen Teile des Deckels 11 aus Kunststoff gefertigt.

**0174439**

Telefon (089) 29 66 84 - 96
Telex 523 155 mitsh d
Telegramme Patentpaap
Telecopier (089) 29 39 63
Psch-Kto. Mchn. 195 75-803
EPA-Kto 28 000 206

PATENTANWÄLTE
Dipl.-Ing. H. MITSCHERLICH
Dipl.-Ing. K. GUNSCHMANN
Dipl.-Ing. Dr.rer.nat. W. KÖRBER
Dipl.-Ing. J. SCHMIDT-EVERS
Dipl.-Ing. W. MELZER
EUROPEAN PATENT ATTORNEYS

Steinsdorfstraße 10
D-8000 München 22

ROTPUNKT
Dr. Anso Zimmermann
Industriestraße
6424 Niederaula/Bad Hersfeld

A n s p r ü c h e
-------------------

1. Isolierkanne oder -flasche mit einem Gehäuse, in dem eine
oberseitige Ausnehmung angeordnet ist, die durch einen
Deckel verschließbar ist, mit einer im Bereich der Ausnehmung
angeordneten Öffnung, die durch einen ein Verschlußglied
tragenden Verschlußschieber zu verschließen und zu öffnen
ist, der im Deckel zwischen einer Öffnungs- und Schließstellung verstellbar gelagert und durch einen in Richtung
auf die Schließstellung starr wirksamen Verstellmechanismus
mit Handhabe, insbesondere Spindeltrieb oder dergleichen,
verstellbar ist, wobei die Bewegung der Handhabe in der Schließstellung begrenzt ist und der Deckel in Richtung der Verstellbewegung des Verschlußschiebers am Gehäuse festgelegt ist,
dadurch  g e k e n n z e i c h n e t ,
daß zwischen dem Verschlußglied (14) und dem Verschlußschieber
(16) eine elastische Verbindung (15) angeordnet ist, die
eine längs  zur Verstellbewegung gerichtete Relativbewegung
zwischen dem Verschlußschieber (16) und dem Verschlußglied
(14) erlaubt, wobei das Verschlußglied (14) in der Schließstellung gegen die Dichtungsfläche (34) der Öffnung (9) vorgespannt ist.

2. Isolierkanne oder -flasche nach Anspruch 1,
dadurch   g e k e n n z e i c h n e t ,
daß das Verschlußglied (14) teleskopartig im oder am
Verschlußschieber (16) gelagert ist und die Vorspannung
durch eine zwischen dem Verschlußglied (14) und dem
Verschlußschieber (16) wirksame Feder (27) erzeugt wird.

3. Isolierkanne oder -flasche nach Anspruch 1 oder 2,
dadurch   g e k e n n z e i c h n e t ,
daß die Feder eine Tellerfeder (27) ist, die im das
eine Teleskopteil (25) aufnehmenden Hohlraum (26) angeordnet ist.

4. Isolierkanne oder -flasche nach einem der Ansprüche
1 bis 3,
dadurch   g e k e n n z e i c h n e t ,
daß der Verschlußschieber (16) ein Gewindeteil mit
Außengewinde ist, das in ein Innengewinde (18) des
Deckels (11) schraubbar und mit einer aus dem Deckel
(11) herausragenden Drehhandhabe (20) verbunden ist.

5. Isolierkanne oder -flasche nach Anspruch 4,
dadurch   g e k e n n z e i c h n e t ,
daß der Verschlußschieber (16) die Oberseite des
Deckels (11) durchfaßt und bevorzugt einstückig mit der
Drehhandhabe (20) verbunden ist.

6. Isolierkanne oder -flasche nach Anspruch 4 oder 5,
dadurch   g e k e n n z e i c h n e t ,
daß zwischen dem Verschlußschieber (16) oder Anbauteilen desselben und dem Deckel (11) quer zur
Drehrichtung (35, 36) der Drehhandhabe (20) gerichtete
Anschlagflächen (37, 38) wirksam sind, die die
Öffnungs- und Schließbewegung des Verschlußschiebers
(16) begrenzen.

7. Isolierkanne oder -flasche nach einem der Ansprüche
4 bis 6,
dadurch gekennzeichnet,
daß der Drehwinkel für die Drehhandhabe (20) ca. eine
halbe Umdrehung beträgt.

8. Isolierkanne oder -flasche nach einem der Ansprüche
1 bis 7,
dadurch gekennzeichnet,
daß der Deckel (11) ein Schraubdeckel ist.

9. Isolierkanne oder -flasche nach einem der Ansprüche
1 bis 8,
dadurch gekennzeichnet,
daß der Deckel (11) mit einem Rand (12) dichtend auf
der Oberseite (13) des Gehäuses (2) aufliegt.

10. Isolierkanne oder -flasche nach Anspruch 9,
dadurch gekennzeichnet,
daß zwischen der Unterseite des Randes (12) und der
Oberseite (13) bevorzugt in einer Ringnut (51) ein
Dichtungsring (52) angeordnet ist.

11. Isolierkanne oder -flasche nach einem der Ansprüche
1 bis 10,
dadurch gekennzeichnet,
daß der Deckel (11) hohl und durch ein Deckeloberteil
(41) und ein Deckelunterteil (42) gebildet ist, die
bevorzugt aneinander verrastbar sind.

12. Isolierkanne oder -flasche nach Anspruch 11,
dadurch gekennzeichnet,
daß die Teilungsfuge (49) zwischen Deckeloberteil (41)
und Deckelunterteil (42) koaxial verläuft und die
Ringnut (51) im Bereich der Teilungsfuge (49) angeordnet
ist.

13. Isolierkanne oder -flasche nach Anspruch 11 oder 12, dadurch gekennzeichnet, daß das Deckeloberteil (41) und/oder Deckelunterteil (42) den Verschlußschieber (16) und/oder die Drehhandhabe (19) mittels wenigstens eines Dichtungsringes, oder wenigstens einer Führungsfläche dicht umschließt.

FIG.1

FIG.2